# EUROPEAN PATENT SPECIFICATION

(11) **EP 3 049 648 B1**
(45) Date of publication and mention of the grant of the patent: **25.10.2017**
(21) Application number: 14787260.0
(22) Date of filing: 23.09.2014
(51) Int. Cl.: F01N 3/20

(54) **EXHAUST GAS CONTROL APPARATUS AND EXHAUST GAS CONTROL METHOD FOR INTERNAL-COMBUSTION ENGINE**
ABGASSTEUERUNGSVORRICHTUNG UND ABGASSTEUERUNGSVERFAHREN FÜR VERBRENNUNGSMOTOREN
APPAREIL DE COMMANDE DE GAZ D'ECHAPPEMENT ET PROCEDE DE COMMANDE DE GAZ D'ÉCHAPPEMENT POUR MOTEURS A COMBUSTION INTERNE

(30) Priority: 25.09.2013 JP 2013198718
(43) Date of publication of application: 03.08.2016
(73) Proprietor: TOYOTA JIDOSHA KABUSHIKI KAISHA, Toyota-shi, Aichi-ken 471-8571 (JP)
(72) Inventor: OTA, Hirohiko, Toyota-shi, Aichi-ken, 471-8571 (JP); TSUCHIYAMA, Makio, Toyota-shi, Aichi-ken, 471-8571 (JP)
(74) Representative: J A Kemp
(86) International application number: PCT/IB2014/002096
(87) International publication number: WO 2015/044768

(56) References cited:
- EP-A1- 2 317 092
- WO-A2-2012/087565
- JP-A- 2005 240 811

## Description

### BACKGROUND OF THE INVENTION

### 1. Field of the Invention

The present invention relates to an exhaust gas control apparatus and an exhaust gas control method for an internal-combustion engine.

### 2. Description of Related Art

In the related art, a method of purifying NOx, for example, using a catalyst, as a method of reducing an amount of NOx produced in a combustion chamber and the like are known as a method of reducing an amount of NOx contained in exhaust gas of an internal-combustion engine.

For example, an internal-combustion engine described in Japanese Patent Application Publication No. 2005-240811 (JP 2005-240811 A) is an exhaust gas control apparatus that reduces NOx and includes a selective-reduction NOx catalyst as one catalyst for purifying NOx in exhaust gas and an adding valve that adds a urea solution, which is used to purify NOx in the NOx catalyst, to an exhaust gas passage.

The urea solution added to the exhaust gas passage from the adding valve is changed to ammonia by hydrolysis using exhaust gas heat. The ammonia is adsorbed on the NOx catalyst and NOx in the exhaust gas is reduced and purified by the adsorbed ammonia. The control of the amount of urea solution added is carried out by an equivalent ratio control of adjusting the amount of urea solution added on the basis of the amount of NOx in the exhaust gas. Accordingly, the larger the amount of NOx produced becomes, the larger the amount of urea solution added becomes.

The internal-combustion engine described in JP 2005-240811 A includes an exhaust gas recirculation device that performs an exhaust gas recirculation process of introducing a part of the exhaust gas into intake air. When a part of the exhaust gas is introduced into the intake air by performing the exhaust gas recirculation process, the combustion rate of a fuel-air mixture in a combustion chamber is lowered and thus the amount of NOx produced decreases.

In European Patent Application 2 317 092 A1, an exhaust gas apparatus for an engine is disclosed that comprises a selective catalytic reduction catalyst, an urea water supply device, a sensor responding to respective quantities of NOx and ammonia downstream of the reduction catalyst and an exhaust gas recirculation passage having a valve. An control device controls a quantity of urea water supplied from the urea supply and the opening and closing of the valve of the exhaust gas recirculation passage.

### SUMMARY OF THE INVENTION

However, when the exhaust gas recirculation process is performed, the ratio of an amount of new air to an amount of intake air suctioned into the combustion chamber decreases. Accordingly, in a high-rotation area or a high-load area of the engine in which the amount of new air requested increases, the performing of the exhaust gas recirculation process is inhibited.

When the performing of the exhaust gas recirculation process is inhibited, the amount of NOx produced in the combustion chamber increases. As described above, in engine operation areas in which the amount of NOx produced is basically large such as the high-rotation area or the high-load area of the engine, the exhaust gas recirculation process is inhibited to give a priority to securement of new air.

Therefore, when the performing of the exhaust gas recirculation process is inhibited, the amount of NOx produced becomes very large. When the amount of NOx produced increases in this way, the amount of reductant added also increases with the increase of the amount of NOx produced by the equivalent ratio control and the accumulated amount of reductant added in a predetermined period of time also increases. When the accumulated amount of reductant added increases in this way, deposits of the reductant tend to be produced in the vicinity of an injection hole of the adding valve.

The present invention provides an exhaust gas control apparatus and an exhaust gas control method for an internal-combustion engine that can suppress production of deposits in an adding valve.

An exhaust gas control apparatus for an internal-combustion engine according to a first aspect of the present invention includes a catalyst, an adding valve, an exhaust gas recirculation device, and a controller. The catalyst reduces NOx in exhaust gas by addition of a reductant. The adding valve adds the reductant to the exhaust gas. The exhaust gas recirculation device performs an exhaust gas recirculation process of introducing a part of the exhaust gas into intake air. The controller is configured to: (a) perform an equivalent ratio control of adjusting an amount of reductant to be added depending on an amount of NOx in the exhaust gas; (b) perform a decreasing process of decreasing the amount of reductant added when the performing of the exhaust gas recirculation process is inhibited so as to be less than the amount of reductant set in the equivalent ratio control; and (c) set a decrement of the amount of reductant by the decreasing process to be smaller as an exhaust gas temperature is higher.

According to the first aspect of the present invention, the amount of reductant added when the performing of the exhaust gas recirculation process is inhibited is decreased by the decreasing process so as to be less than the amount of reductant added set by the equivalent ratio control. Accordingly, in situations in which the performing of the exhaust gas recirculation process is inhibited and the amount of NOx produced tends to increase, it is possible to decrease the amount of reductant added. As a result, it is possible to suppress the increase of the accumulated amount of reductant added and thus to suppress production of deposits in the adding valve.

When the exhaust gas temperature is high, vaporization of the reductant attached to the adding valve is promoted and thus the production of deposits is suppressed. Accordingly, according to this configuration, the decrement of the amount of reductant added by the decreasing process is set to be smaller as the exhaust gas temperature becomes higher. As a result, it is also possible to set the decrement of the amount of reductant added to be appropriate depending on the production tendency of deposits.

When the reductant is added by the equivalent ratio control in a situation in which the amount of NOx produced is large, the amount of reductant consumed increases. However, according to this configuration, the amount of reductant added in such a situation decreases to be less than the amount of reductant added set by the equivalent ratio control. Accordingly, it is also possible to suppress the increase of the amount of reductant consumed.

As the coolant temperature of an engine becomes higher, the exhaust gas temperature tends to become higher. As the external air temperature becomes higher, the exhaust gas temperature tends to becomes higher. As the atmospheric pressure becomes lower, the exhaust gas temperature tends to become higher. In the exhaust gas control apparatus according to the first aspect of the present invention, the controller may change the decrement on the basis of at least one of an engine coolant temperature, an external air temperature, and an atmospheric pressure. Accordingly, it is possible to set the decrement corresponding to the exhaust gas temperature. In this case, as the coolant temperature of an engine becomes higher, the decrement of the amount of reductant may be set to be less. In addition, as the external air temperature becomes higher, the decrement of the amount of reductant may be set to be less. As the atmospheric pressure becomes lower, the decrement of the amount of reductant may be set to be less.

When the performing of the exhaust gas recirculation process is inhibited for a relatively short time, the accumulated amount of reductant added does not increase much and thus deposits are hardly produced without performing the decreasing process. In the controller according to the first aspect of the present invention, the controller may perform the decreasing process when the performing of the exhaust gas recirculation process is continuously inhibited for a predetermined time or, more.

When the exhaust gas control apparatus is mounted on a vehicle and the vehicle runs at a high speed equal to or greater than a predetermined speed, the internal-combustion engine is in a high-load state and thus the amount of NOx produced increases in comparison with a case where the vehicle runs at a low speed. In the exhaust gas control apparatus according to the first aspect of the present invention, the exhaust gas control apparatus may be mounted on a vehicle, and the controller may perform the decreasing process when the performing of the exhaust gas recirculation process is continuously inhibited for a predetermined time or more and the vehicle runs at a high speed equal to or greater than a predetermined speed. In this case, the decreasing process can be performed when the amount of NOx produced tends to increase.

As the temperature of the adding valve becomes higher, the vaporization of the reductant attached to the adding valve is promoted and thus the production of deposits is suppressed. In the exhaust gas control apparatus according to the first aspect of the present invention, the controller may change the decrement on the basis of the temperature of the adding valve. In this case, it is possible to appropriately set the decrement of the amount of reductant added depending on the production tendency of deposits.

In the exhaust gas control apparatus according to the first aspect of the present invention, the controller may set an upper limit for limiting the amount of reductant added. The controller may decrease the amount of reductant added by decreasing the upper limit when the performing of the exhaust gas recirculation process is inhibited as the decreasing process. In this case, as the exhaust gas temperature becomes higher, the decrement of the upper limit may be set to be less.

When a catalyst for adsorbing ammonia originating from the reductant is provided and the amount of reductant added is decreased by the decreasing process, the amount of ammonia adsorbed by the catalyst may become insufficient and an NOx purification rate may be lowered. In the exhaust gas control apparatus according to the first aspect of the present invention, the catalyst may be a catalyst that adsorbs ammonia originating from the reductant, and the controller may adjust the amount of reductant added so as to increase the amount of ammonia adsorbed even in the course of performing the decreasing process when the amount of ammonia adsorbed by the catalyst is equal to or less than a predetermined value. In this case, since a priority is given to the adsorption of ammonia by the catalyst rather than the decrease of the amount of reductant added by the decreasing process, it is possible to suppress lowering of the NOx purification rate due to the insufficiency of the amount of ammonia adsorbed.

In an exhaust gas control method for an internal-combustion engine according to a second aspect of the present invention, the internal-combustion engine includes a catalyst, an adding valve, and an exhaust gas recirculation device. The catalyst reduces NOx in exhaust gas by addition of a reductant. The adding valve adds the reductant to the exhaust gas. The exhaust gas recirculation device performs an exhaust gas recirculation process of introducing a part of the exhaust gas into intake air. The exhaust gas control method includes: performing an equivalent ratio control of adjusting an amount of reductant to be added depending on an amount of NOx in the exhaust gas; performing a decreasing process of decreasing the amount of reductant added when the performing of the exhaust gas recirculation process is inhibited so as to be less than the amount of reductant set in the equivalent ratio control; and setting a decrement of the amount of reductant by the decreasing process to be smaller as an exhaust gas temperature is higher.

In the exhaust gas control method according to the second aspect of the present invention, the decrement may be changed on the basis of at least one of an engine coolant temperature, an external air temperature, and an atmospheric pressure.

In the exhaust gas control method according to the second aspect of the present invention, the decreasing process may be performed when the performing of the exhaust gas recirculation process is continuously inhibited for a predetermined time or more.

In the exhaust gas control method according to the second aspect of the present invention, the exhaust gas control apparatus may be mounted on a vehicle, and the decreasing process may be performed when the performing of the exhaust gas recirculation process is continuously inhibited for a predetermined time or more and the vehicle runs at a high speed equal to or greater than a predetermined speed.

In the exhaust gas control method according to the second aspect of the present invention, the decrement may be changed on the basis of the temperature of the adding valve.

In the exhaust gas control method according to the second aspect of the present invention, the method may be setting an upper limit for limiting the amount of reductant added. the amount of reductant added may be decreased by decreasing the upper limit when the performing of the exhaust gas recirculation process is inhibited as the decreasing process.

In the exhaust gas control method according to the second aspect of the present invention, the catalyst may be a catalyst that adsorbs ammonia originating from the reductant, and the amount of reductant added may be adjusted so as to increase the amount of ammonia adsorbed even in the course of performing the decreasing process when the amount of ammonia adsorbed by the catalyst is equal to or less than a predetermined value.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically illustrating a configuration of an internal-combustion engine to which an exhaust gas control apparatus for an internal-combustion engine according to a first embodiment is applied and the periphery thereof;
FIG. 2 is a graph illustrating an allowed area and an inhibited area of an exhaust gas recirculation process;
FIG. 3 is a flowchart illustrating a process flow of decreasing an amount of reductant added in the first embodiment;
FIG. 4 is a table illustrating a relationship between a coolant temperature and a coolant temperature coefficient in the first embodiment;
FIG. 5 is a table illustrating a relationship between an external air temperature and an external air temperature coefficient in the first embodiment;
FIG. 6 is a table illustrating a relationship between an atmospheric pressure and an atmospheric pressure coefficient in the first embodiment;
FIG. 7 is a flowchart illustrating a part of a process flow of decreasing an amount of reductant added in a second embodiment;
FIG. 8 is a table illustrating a relationship between an adding valve temperature and an adding valve temperature coefficient in the second embodiment;
FIG. 9 is a flowchart illustrating a part of a process flow of decreasing an amount of reductant added in a third embodiment; and
FIG. 10 is a flowchart illustrating a part of a process flow of decreasing an amount of reductant added in a modification example of the first embodiment.

### DETAILED DESCRIPTION OF EMBODIMENTS

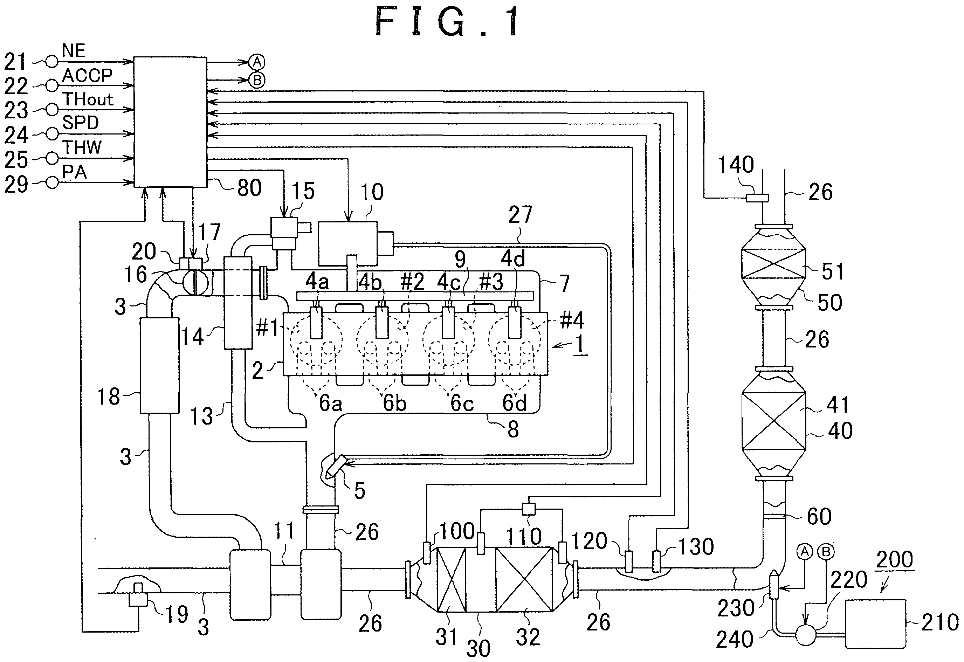

Hereinafter, an exhaust gas control apparatus for an internal-combustion engine according to a first embodiment will be described with reference to FIGS. 1 to 6.

FIG. 1 illustrates the configuration of a diesel engine (hereinafter, simply referred to as "engine") as an internal-combustion engine to which an exhaust gas control apparatus is applied and the exhaust gas control apparatus disposed in the engine 1. The engine 1 is provided with multiple cylinders #1 to #4. A cylinder head 2 is provided with multiple fuel injection valves 4a to 4d to correspond to cylinders #1 to #4. The fuel injection valves 4a to 4d inject a fuel into combustion chambers of cylinders #1 to #4. The cylinder head 2 is also provided with intake ports for introducing new air into the cylinders and exhaust ports 6a to 6d for discharging combustion gas to the outside of the cylinders to correspond to cylinders #1 to #4.

The fuel injection valves 4a to 4d are connected to a common rail 9 that accumulates high-pressure fuel. The common rail 9 is connected to a supply pump 10. The supply pump 10 suctions fuel in a fuel tank and supplies the high-pressure fuel to the common rail 9. The high-pressure fuel supplied to the common rail 9 is injected into the cylinders from the fuel injection valves 4a to 4d when the fuel injection valves 4a to 4d are opened.

An intake manifold 7 is connected to the intake ports. The intake manifold 7 is connected to an intake air passage 3. An intake throttle valve 16 for adjusting an amount of intake air is disposed in the intake air passage 3.

An exhaust manifold 8 is connected to the exhaust ports 6a to 6d. The exhaust manifold 8 is connected to an exhaust gas passage 26. A turbocharger 11 for supercharging the cylinders with the introduced intake air is provided in the middle of the exhaust gas passage 26. The turbocharger 11 performs the supercharging using an exhaust gas pressure of the exhaust gas passage 26. An intercooler 18 is disposed in the intake air passage 3 between an intake-side compressor of the turbocharger 11 and the intake throttle valve 16. The intake air of which the temperature is raised by the supercharging of the turbocharger 11 is cooled by the intercooler 18.

A first purification member 30 for purifying the exhaust gas is disposed on the exhaust downstream side of an exhaust-side turbine of the turbocharger 11 in the middle of the exhaust gas passage 26. In the first purification member 30, an oxidation catalyst 31 and a filter 32 are arranged in series with the exhaust flow.

A catalyst for oxidizing HC in the exhaust gas is contained in the oxidation catalyst 31. The filter 32 is a member for capturing particulate matters (PM) in the exhaust gas and is formed of porous ceramics. The filter 32 contains a catalyst for promoting oxidation of the PM, and the PM in the exhaust gas is captured at the time of passing through a porous wall of the filter 32.

A fuel adding valve 5 for supplying fuel as an additive to the oxidation catalyst 31 or the filter 32 is disposed in the vicinity of the assembly part of the exhaust manifold 8. The fuel adding valve 5 is connected to the supply pump 10 via a fuel supply pipe 27. The position of the fuel adding valve 5 can be appropriately changed as long as it is located upstream of the first purification member 30 in an exhaust system. By adjusting an injection time of fuel and performing post injection, fuel as an additive may be supplied to the oxidation catalyst 31 or the filter 32.

When the amount of PM captured by the filter 32 is greater than a predetermined value, a recycle process of the filter 32 is started and fuel is injected from the fuel adding valve 5 into the exhaust manifold 8. The fuel injected from the fuel adding valve 5 is combusted in the oxidation catalyst 31 and thus the rise in the exhaust gas temperature is achieved. By causing the exhaust gas, the temperature of which is raised by the oxidation catalyst 31, to flow in the filter 32, the temperature of the filter 32 rises, the PM captured by the filter 32 is oxidized, and thus the recycle of the filter 32 is achieved.

In the middle of the exhaust gas passage 26, a second purification member 40 that purifies exhaust gas is disposed on the exhaust downstream side of the first purification member 30. A selective-reduction NOx catalyst (hereinafter, referred to as SCR catalyst) 41 that reduces the NOx in the exhaust gas using a reductant is disposed in the second purification member 40.

In the middle of the exhaust gas passage 26, a third purification member 50 that purifies exhaust gas is disposed on the exhaust downstream side of the second purification member 40. An ammonia-oxidizing catalyst 51 that purifies the ammonia in the exhaust gas is disposed in the third purification member 50.

The engine 1 is provided with a urea solution supply mechanism 200 as a reductant supply mechanism that adds a reductant to the SCR catalyst 41. The urea solution supply mechanism 200 includes a tank 210 that reserves a urea solution, a urea adding valve 230 that injects and supplies the urea solution into the exhaust gas passage 26, a supply passage 240 that connects the urea adding valve 230 and the tank 210 to each other, and a pump 220 that is disposed in the middle of the supply passage 240.

The urea adding valve 230 is disposed in the exhaust gas passage 26 between the first purification member 30 and the second purification member 40, and an injection hole thereof is opened to the SCR catalyst 41. When the urea adding valve 230 is opened, the urea solution is injected and supplied into the exhaust gas passage 26 via the supply passage 240.

The pump 220 is an electric pump and supplies the urea solution from the tank 210 to the urea adding valve 230 at the time of forward rotation. On the other hand, the pump 220 supplies the urea solution from the urea adding valve 230 to the tank 210 at the time of reverse rotation. That is, the urea solution is recovered and returned from the urea adding valve 230 and the supply passage 240 to the tank 210 at the time of reverse rotation of the pump 220.

A dispersing plate 60 that promoting atomization of the urea solution by dispersing the urea solution injected from the urea adding valve 230 is disposed in the exhaust gas passage 26 between the urea adding valve 230 and the SCR catalyst 41.

The urea solution injected from the urea adding valve 230 is hydrolyzed into ammonia by heat of the exhaust gas. The ammonia is supplied as the reductant of NOx to the SCR catalyst 41. The ammonia supplied to the SCR catalyst 41 is adsorbed by the SCR catalyst 41 and is used to reduce NOx.

In addition, the engine 1 is provided with an exhaust gas recirculation device (hereinafter, referred to as EGR device). By performing an exhaust gas recirculation process (hereinafter, referred to as EGR process) of introducing a part of the exhaust gas into the intake air using the EGR device, the combustion temperature in the cylinders falls and the amount of NOx produced decreases. The EGR device includes an EGR passage 13 that causes the intake air passage 3 and the exhaust manifold 8 to communicate with each other, an EGR valve 15 that is disposed in the EGR passage 13, and an EGR cooler 14. By adjusting the opening of the EGR valve 15, an amount of exhaust gas circulating, that is, a so-called external EGR volume, that is introduced from the exhaust gas passage 26 to the intake air passage 3 is adjusted. The temperature of the exhaust gas flowing in the EGR passage 13 is lowered by the EGR cooler 14.

The engine 1 is provided with various sensors for detecting an engine operation state. For example, an air flowmeter 19 detects an amount of intake air GA. A throttle valve opening sensor 20 detects an opening of an intake throttle valve 16. An engine rotation speed sensor 21 detects the rotation speed of a crank shaft, that is, the engine rotation speed NE. An accelerator sensor 22 detects a pressure applied to an accelerator pedal, that is, an accelerator pressure ACCP. An external air temperature sensor 23 detects an external air temperature THout. A vehicle speed sensor 24 detects a vehicle speed SPD of a vehicle having the engine 1 mounted thereon. A water temperature sensor 25 detects a coolant temperature THW of the engine 1. An atmospheric pressure sensor 29 detects an atmospheric pressure PA.

A first exhaust gas temperature sensor 100 disposed upstream of the oxidation catalyst 31 detects a first exhaust gas temperature TH1 that is the exhaust gas temperature before the exhaust gas flows in the oxidation catalyst 31. A differential pressure sensor 110 detects a pressure difference ΔP in exhaust gas pressure between the upstream and the downstream of the filter 32.

In the exhaust gas passage 26 between the first purification member 30 and the second purification member 40, a second exhaust gas temperature sensor 120 and a first NOx sensor 130 are disposed upstream of the urea adding valve 230. The second exhaust gas temperature sensor 120 detects a second exhaust gas temperature TH2 that is the exhaust gas temperature before the exhaust gas flows in a SCR catalyst 41. The first NOx sensor 130 detects an amount of NOx contained in the exhaust gas before the exhaust gas flows in the SCR catalyst 41, more specifically, a first NOx concentration N1 as the concentration of NOx (in a unit of ppm).

The exhaust gas passage 26 downstream of the third purification member 50 is provided with a second NOx sensor 140 that detects a second NOx concentration N2 as the concentration of NOx in the exhaust gas purified by SCR catalyst 41.

The outputs of these sensors and the like are input to the controller 80. The controller 80 is mainly constituted by a microcomputer including a central processing unit (CPU), a read only memory (ROM) that stores various programs or maps, a random access memory (RAM) that temporarily stores computation results of the CPU and the like, a timer counter, an input interface, and an output interface.

Various controls of the engine 1 such as a fuel injection control of the fuel injection valves 4a to 4d or the fuel adding valve 5, an ejection pressure control of the supply pump 10, and a drive control of an actuator 17 that opens and closes the intake throttle valve 16 are performed by the controller 80.

Various exhaust gas controls such as the recycling process of combusting the PM captured by the filter 32 are performed by the controller 80. The controller 80 performs an EGR process using adjustment of the opening of the EGR valve 15 as one of such exhaust gas controls.

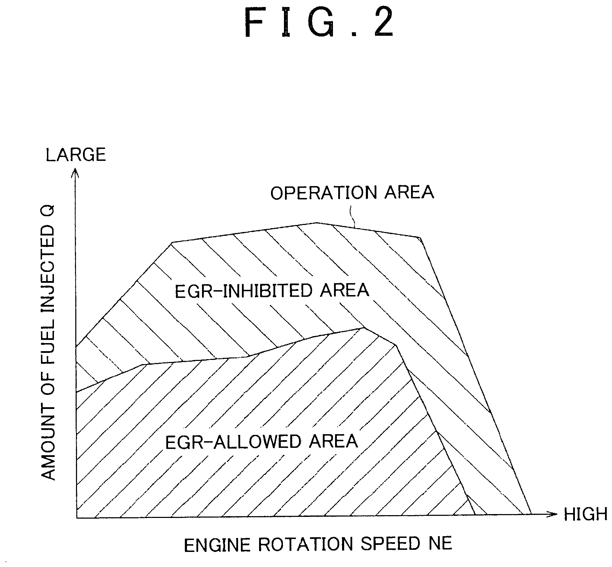

As illustrated in FIG. 2, in the entire operation area of the engine 1, a high-rotation area in which the engine rotation speed NE is high or a high-load area in which the amount of fuel injected Q from the fuel injection valves is large are set as an EGR-inhibited area in which the performing of the EGR process is inhibited. This is because the ratio of new air in the amount of intake air suctioned into the combustion chamber decreases by performing the EGR process and thus the performing of the EGR process is inhibited in the high-rotation area or the high-load area in which the amount of new air requested increases. In the operation area of the engine 1, the area other than the EGR-inhibited area is set as an EGR-allowed area in which the EGR process is performed.

In the EGR-allowed area, a target EGR volume Ep is set on the basis of the engine rotation speed NE, the amount of fuel injected Q, the amount of intake air GA, and the like. By adjusting the opening of the EGR valve 15 depending on the target EGR volume Ep, the amount of NOx produced is suitably decreased to an appropriate state corresponding to the engine operation state. By setting the opening of the EGR valve 15 to be larger as the value of the target EGR volume Ep becomes larger, the amount of exhaust gas returned to the combustion chambers increases. As the amount of exhaust gas returned to the combustion chambers increases, the combustion temperature of the fuel-air mixture in the cylinders falls and the amount of NOx produced decreases.

The controller 80 performs a control of adding the urea solution through the use of the urea adding valve 230 as one of the exhaust gas controls. In the addition control, an amount of urea added QE is calculated by an equivalent ratio control of adjusting the amount of urea solution added depending on the amount of NOx in the exhaust gas.

In the equivalent ratio control, a target equivalent ratio TT based on the amount intake air GA and the second exhaust gas temperature TH2 is calculated by the controller 80. The target equivalent ratio TT is an amount of urea solution added just enough to reduce NOx and is an amount of urea solution required per unit concentration of NOx (for example, an amount of urea solution required for completely reducing I ppm of NOx). The larger the amount of intake air GA becomes (that is, the larger the amount of exhaust gas flowing) or the higher the second exhaust gas temperature TH2 becomes, the larger the amount of urea solution required per unit concentration of NOx tends to become. Accordingly, the target equivalent ratio TT is variably set so that the larger the amount of intake air GA becomes or the higher the second exhaust gas temperature TH2 becomes, the larger of the target equivalent ratio TT becomes. By multiplying the target equivalent ratio TT by a first NOx concentration N1, the amount of urea added QE corresponding to the current amount of NOx produced. By calculating the amount of urea added QE added in this way, the higher the first NOx concentration N1 becomes, that is, the larger the amount of NOx discharged from the combustion chambers of the engine 1 becomes, the larger the amount of urea added QE becomes.

When the performing of the EGR process is inhibited, the amount of NOx produced in the combustion chambers increases. As illustrated in FIG 2, the EGR process is inhibited to give priority to securement of new air in the engine operation area in which the amount of NOx produced is large, such as the high-rotation area or the high-load area of the engine.

Therefore, when the performing of the EGR process is inhibited, the amount of NOx produced increases very much. When the amount of NOx produced increases in this way, the amount of urea added QE increases with the increase of the amount of NOx produced by the equivalent ratio control, and the accumulation of urea solution added for a predetermined period of time increases. When the accumulation of urea solution added increases in this way, deposits of the urea solution are easily produced in the vicinity of the injection hole of the urea adding valve 230.

Therefore, in this embodiment, the production of deposits in the urea adding valve 230 is suppressed by performing a decreasing process of decreasing the amount of urea solution added when the performing of the EGR process is inhibited so as to be less than the amount of urea solution calculated by the equivalent ratio control.

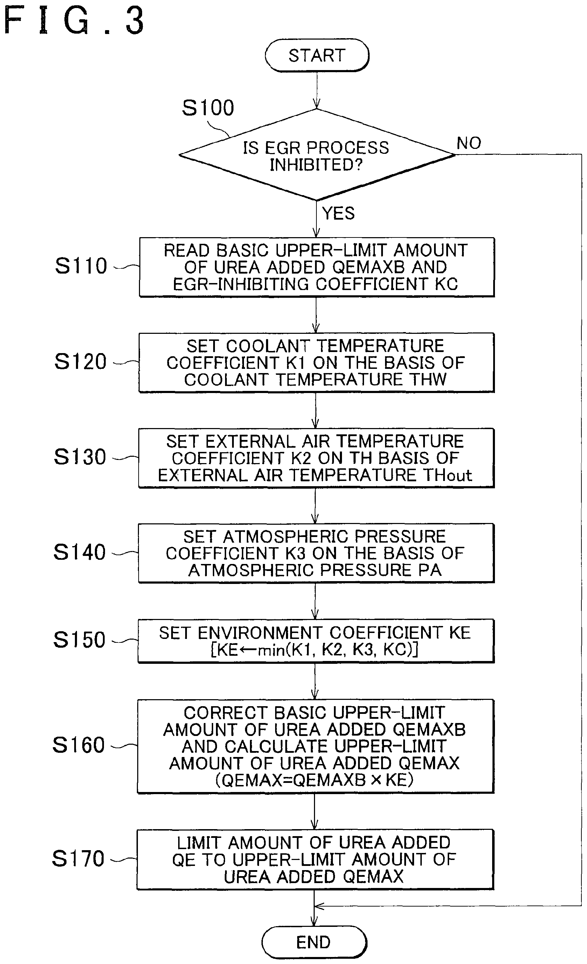

FIG. 3 illustrates a process flow of performing the decreasing process. This process flow is repeatedly performed for every predetermined cycle by the controller 80. As illustrated in FIG. 3, when this process flow is started, the controller 80 determines whether the EGR process is inhibited (S100). The determination result of step S 100 is positive when the engine operation state is in the EGR-inhibited area. When the EGR process is performed (NO in S100), the controller 80 temporarily ends this process flow.

On the other hand, when the performing of the EGR process is inhibited (YES in S100), the controller 80 reads a basic upper-limit amount of urea added QEMAXB and an EGR-inhibiting coefficient KC (S110). The basic upper-limit amount of urea added QEMAXB is a basic value of an upper limit for limiting the amount of urea added QE and is set to a maximum amount of urea solution added that can suppress the production of deposits in the urea adding valve 230 in a predetermined standard state. The standard state means, for example, a state where the coolant temperature THW is a specified temperature (for example, about 80°C), the external air temperature THout is a specified temperature (for example, about 25°C), and the atmospheric pressure PA is a specified pressure (for example, about 1013 hPa).

The EGR-inhibiting coefficient KC is a basic value of a multiplier coefficient for decreasing the basic upper-limit amount of urea added QEMAXB and is appropriately set to a value (0<K<1) in a range of greater than "0" and less than "1". The smaller the EGR-inhibiting coefficient KC becomes, the smaller the basic upper-limit amount of urea added QEMAXB after being decreased becomes than the amount before being decreased. In other words, the smaller the EGR-inhibiting coefficient KC becomes, the larger the decrement of the basic upper-limit amount of urea added QEMAXB becomes.

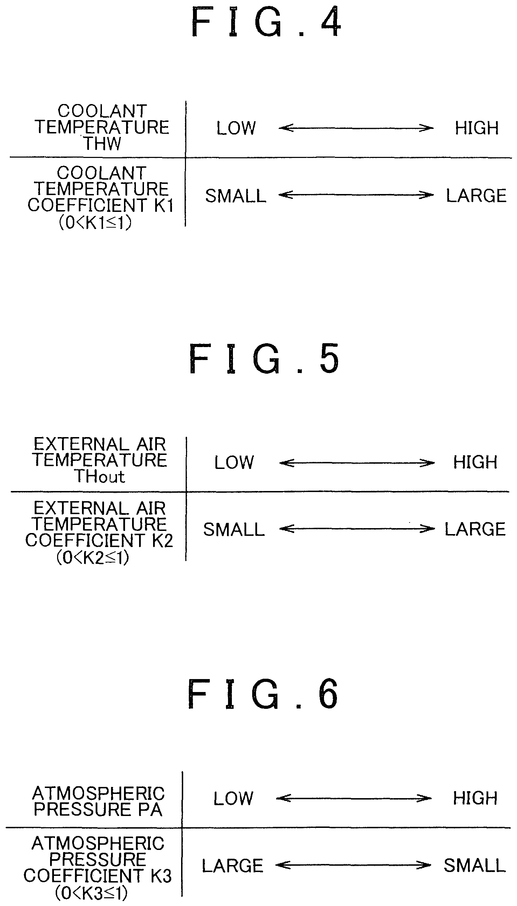

Then, the controller 80 sets the coolant temperature coefficient K1 on the basis of the coolant temperature THW (S120). FIG. 4 illustrates a setting example of the coolant temperature coefficient K1. The coolant temperature coefficient K1 is a basic value of a multiplier coefficient for decreasing the basic upper-limit amount of urea added QEMAXB and is set to a value in a range of greater than "0" and less than "1". The higher the coolant temperature THW becomes, the larger the coolant temperature coefficient K1 becomes. The smaller the coolant temperature coefficient K1 becomes, the smaller the basic upper-limit amount of urea added QEMAXB after being decreased becomes than the amount before being decreased. In other words, the smaller the coolant temperature coefficient K1 becomes, the larger the decrement of the basic upper-limit amount of urea added QEMAXB becomes.

Then, the controller 80 sets the external air temperature coefficient K2 on the basis of the external air temperature THout (S130). FIG. 5 illustrates a setting example of the external air temperature coefficient K2. The external air temperature coefficient K2 is a basic value of a multiplier coefficient for decreasing the basic upper-limit amount of urea added QEMAXB and is set to a value in a range of greater than "0" and less than "1". The higher the external air temperature THout becomes, the larger the external air temperature coefficient K2 becomes. The smaller the external air temperature coefficient K2 becomes, the smaller the basic upper-limit amount of urea added QEMAXB after being decreased becomes than the amount before being decreased. In other words, the smaller the external air temperature coefficient K2 becomes, the larger the decrement of the basic upper-limit amount of urea added QEMAXB becomes.

Then, the controller 80 sets the atmospheric pressure coefficient K3 on the basis of the atmospheric pressure PA (S140). FIG. 6 illustrates a setting example of the atmospheric pressure coefficient K3. The atmospheric pressure coefficient K3 is a basic value of a multiplier coefficient for decreasing the basic upper-limit amount of urea added QEMAXB and is set to a value in a range of greater than "0" and less than "1". The lower the atmospheric pressure PA becomes, the larger the atmospheric pressure coefficient K3 becomes. The smaller the atmospheric pressure coefficient K3 becomes, the smaller the basic upper-limit amount of urea added QEMAXB after being decreased becomes than the amount before being decreased. In other words, the smaller the atmospheric pressure coefficient K3 becomes, the larger the decrement of the basic upper-limit amount of urea added QEMAXB becomes.

Then, the controller 80 sets an environment coefficient KE (S150). In step S150, the smallest value of the coolant temperature coefficient K1, the external air temperature coefficient K2, the atmospheric pressure coefficient K3, and the EGR-inhibiting coefficient KC is set as the environment coefficient KE.

Then, the controller 80 calculates an upper-limit amount of urea added QEMAX by multiplying the basic upper-limit amount of urea added QEMAXB by the environment coefficient KE to correct the basic upper-limit amount of urea added QEMAXB (S 160).

The controller 80 limits the amount of urea added QE to the upper-limit amount of urea added QEMAX (S170) and ends this process flow. By limiting the amount of urea added QE to the upper-limit amount of urea added QEMAX, the amount of urea added QE is replaced with the upper-limit amount of urea added QEMAX when the amount of urea added QE is greater than the upper-limit amount of urea added QEMAX. Accordingly, in this case, the amount of urea added QE set by the equivalent ratio control is decreased to the upper-limit amount of urea added QEMAX. On the other hand, when the amount of urea added QE is equal to or less than the upper-limit amount of urea added QEMAX, the amount of urea added QE set by the equivalent ratio control is maintained.

The operations in this embodiment will be described below. When the performing of the EGR process is inhibited (YES in S100), the amount of urea added QE is limited to the upper-limit amount of urea added QEMAX (S 170). Accordingly, when the amount of urea added QE calculated by the equivalent ratio control is greater than the upper-limit amount of urea added QEMAX, the amount of urea added QE is decreased to the upper-limit amount of urea added QEMAX. In this way, the amount of urea added QE when the performing of the EGR process is inhibited is decreased to be less than the amount of urea added set by the equivalent ratio control. Accordingly, in situations in which the performing of the EGR process is inhibited and the amount of NOx produced tends to increase, the amount of urea solution added decreases and the increase of the accumulated amount of urea solution is suppressed. Accordingly, it is possible to suppress the production of deposits in the urea adding valve 230.

When urea is added under the equivalent ratio control in a situation in which the amount of NOx produced is large, the amount of urea solution consumed increases. However, according to this embodiment, the amount of urea solution added is less than the amount of urea solution added by the equivalent ratio control in such a situation. Accordingly, it is also possible to suppress the increase in the amount of urea solution consumed.

The basic upper-limit amount of urea added QEMAXB is set in advance. When the performing of the exhaust gas recirculation process is inhibited, the reading of the EGR-inhibiting coefficient KC (S110), the setting of the coolant temperature coefficient K1 (S120), the setting of the external air temperature coefficient K2 (S130), and setting of the atmospheric pressure coefficient K3 (S140) are performed. The smallest value of the EGR-inhibiting coefficient KC, the coolant temperature coefficient K1, the external air temperature coefficient K2, and the atmospheric pressure coefficient K3 is set as the environment coefficient KE (S150), and the upper-limit amount of urea added QEMAX is calculated by multiplying the basic upper-limit amount of urea added QEMAXB by the environment coefficient KE (S160).

Here, the EGR-inhibiting coefficient KC is a value greater than "0" and less than "1". The coolant temperature coefficient K1, the external air temperature coefficient K2, and the atmospheric pressure coefficient K3 are values set to be variable in a range of greater than "0" to less than "1". Accordingly, the environment coefficient KE is set to a value in a range of greater than "0" and less than "1", and the basic upper-limit amount of urea added QEMAXB is corrected to decrease by the environment coefficient KE. The value of the upper-limit amount of urea added QEMAX for limiting the amount of urea added QE is changed by The decreasing correction of the basic upper-limit amount of urea added QEMAXB, and the amount of urea added QE is suitably limited by the set environment coefficient KE.

As the exhaust gas temperature becomes higher, the vaporization of the urea solution attached to the urea adding valve 230 is more promoted and thus the production of deposits is suppressed. Accordingly, by decreasing the decrement of the amount of urea added QE as the exhaust gas temperature increases, it is possible to appropriately set the decrement of the amount of urea added QE depending on the production tendency of deposits.

Here, the higher the coolant temperature THW becomes, the higher the exhaust gas temperature tends to become. Accordingly, as illustrated in FIG. 4, by setting the coolant temperature coefficient K1 to be larger as the coolant temperature THW becomes higher, the decrement in the decreasing correction of the basic upper-limit amount of urea added QEMAXB is decreased depending on the coolant temperature coefficient K1. Therefore, as the coolant temperature THW becomes higher and the exhaust gas temperature becomes higher, the decrement of the upper-limit amount of urea added QEMAX for limiting the amount of urea added QE becomes smaller and thus the higher the exhaust gas temperature becomes, the smaller the decrement of the amount of urea added QE becomes.

Here, the higher the external air temperature THout becomes, the higher the exhaust gas temperature tends to become. Accordingly, as illustrated in FIG. 5, by setting the external air temperature coefficient K2 to be larger as the external air temperature THout becomes higher, the decrement in the decreasing correction of the basic upper-limit amount of urea added QEMAXB is decreased depending on the external air temperature coefficient K2. Therefore, as the external air temperature THout becomes higher and the exhaust gas temperature becomes higher, the decrement of the upper-limit amount of urea added QEMAX for limiting the amount of urea added QE becomes smaller and thus the higher the exhaust gas temperature becomes, the smaller the decrement of the amount of urea added QE becomes.

Here, the lower the atmospheric pressure PA becomes, the smaller the air density becomes, the smaller the heat capacity in the combustion chambers becomes, and the higher the exhaust gas temperature tends to become. Accordingly, as illustrated in FIG. 6, by setting the atmospheric pressure coefficient K3 to be larger as the atmospheric air pressure PA becomes lower, the decrement in the decreasing correction of the basic upper-limit amount of urea added QEMAXB is decreased depending on the atmospheric pressure coefficient K3. Therefore, as the atmospheric pressure PA becomes higher and the exhaust gas temperature becomes higher, the decrement of the upper-limit amount of urea added QEMAX for limiting the amount of urea added QE becomes smaller and thus the higher the exhaust gas temperature becomes, the smaller the decrement of the amount of urea added QE becomes.

In this way, the higher the exhaust gas temperature becomes, the smaller the decrement of the amount of urea added QE by the decreasing process becomes. Accordingly, it is possible to appropriately set the decrement of the amount of urea added QE depending on the production tendency of deposits.

As described above, the following advantages can be achieved from this embodiment. (1) The decreasing process of decreasing the amount of urea solution added QE when the performing of the EGR process is inhibited so as to be less than the amount of urea solution set by the equivalent ratio control. Accordingly, it is possible to suppress the production of deposits in the urea adding valve 230.

(2) By performing the decreasing process, it is possible to suppress an increase in the amount of urea solution consumed in situations in which the amount of NOx produced is large. (3) The decrement of the amount of urea added QE by the decreasing process is set to be smaller as the exhaust gas temperature becomes higher. Accordingly, it is possible to appropriately set the decrement of the amount of urea added QE depending on the production tendency of deposits.

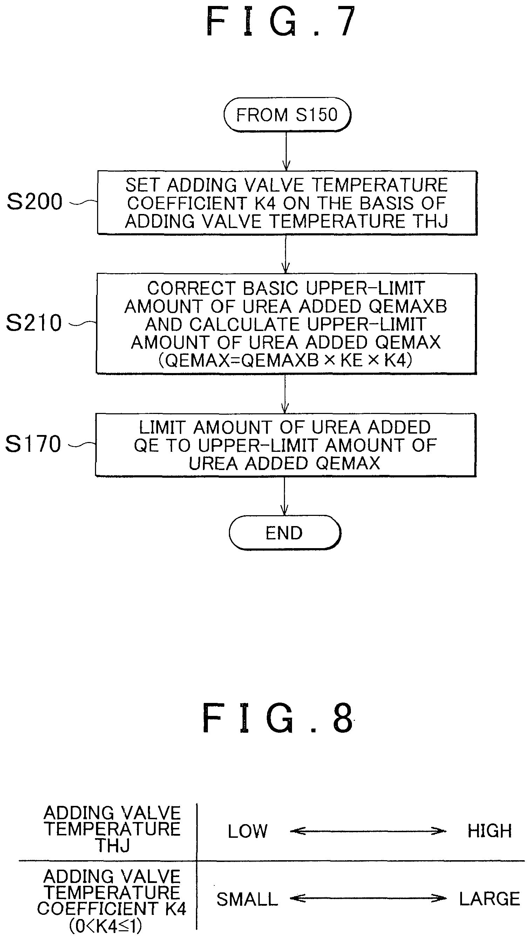

(4) The decrement of the amount of urea added QE is changed by setting the correction coefficient of the basic upper-limit amount of urea added QEMAXB to be variable on the basis of the coolant temperature THW, the external air temperature THout, or the atmospheric pressure PA. Accordingly, it is possible to set the decrement of the amount of urea added QE depending on the exhaust gas temperature. An exhaust gas control apparatus for an internal-combustion engine according to a second embodiment will be described below with reference to FIG. 7.

As the temperature of the urea adding valve 230 becomes higher, the vaporization of the urea solution attached to the urea adding valve 230 is promoted and thus the production of deposits is suppressed. Accordingly, in this embodiment, the decrement of the amount of urea added QE when the performing of the EGR process is inhibited is changed by decreasing the basic upper-limit amount of urea added QEMAXB in consideration of the temperature of the urea adding valve 230.

The decreasing process of this embodiment skips the process of step S160 illustrated in FIG. 3. The decreasing process is performed by additionally performing the processes of steps S200 and S210 illustrated in FIG. 7 between steps S150 and S170.

That is, after the environment coefficient KE is set in step S150 illustrated in FIG. 3, the controller 80 performs the process of step S200 illustrated in FIG. 7. In step S200 illustrated in FIG. 7, the controller 80 sets an adding valve temperature coefficient K4 on the basis of an adding valve temperature THJ.

The adding valve temperature THJ is a tip temperature of the urea adding valve 230. The tip temperature can be directly detected using a sensor or the like, but in this embodiment, the adding valve temperature THJ is estimated on the basis of various parameters such as the second exhaust gas temperature TH2 indicating the exhaust gas temperature in the vicinity of the urea adding valve 230, an exhaust gas flow rate GS, the external air temperature THout, and the vehicle speed SPD. That is, the higher the second exhaust gas temperature TH2 becomes, the higher the tip temperature of the urea adding valve 230 becomes. Accordingly, the higher the second exhaust gas temperature TH2 becomes, the larger the estimated value of the adding valve temperature THJ becomes. The larger the exhaust gas flow rate GS becomes, the larger the amount of heat moving from the exhaust gas to the tip of the urea adding valve 230 becomes. Accordingly, the larger the exhaust gas flow rate GS becomes, the larger the estimated value of the adding valve temperature THJ becomes. The higher the external air temperature THout becomes, the higher the temperature of the urea adding valve 230 becomes. Accordingly, the higher the external air temperature THout becomes, the larger the estimated value of the adding valve temperature THJ becomes. The lower the vehicle speed SPD becomes, the lower the cooling effect of the urea adding valve 230 by running wind becomes. Accordingly, the lower the vehicle speed SPD becomes, the larger the estimated value of the adding valve temperature THJ becomes.

FIG. 8 illustrates a setting example of the adding valve temperature coefficient K4. The adding valve temperature coefficient K4 is a multiplier coefficient for decreasing the basic upper-limit amount of urea added QEMAXB and is set to be variable in a range of greater than "0" and less than "1". The higher the adding valve temperature THJ becomes, the larger the adding valve temperature coefficient K4 becomes. The smaller the adding valve temperature coefficient K4 becomes, the smaller the basic upper-limit amount of urea added QEMAXB after being decreased becomes than the amount before being decreased. In other words, the smaller the adding valve temperature coefficient K4 becomes, the larger the decrement of the basic upper-limit amount of urea added QEMAXB becomes.

When the adding valve temperature coefficient K4 is set in this way, the controller 80 calculates upper-limit amount of urea added QEMAX by multiplying the basic upper-limit amount of urea added QEMAXB by the environment coefficient KE and the adding valve temperature coefficient K4 and correcting the basic upper-limit amount of urea added QEMAXB (S210).

Then, the controller 80 limits the amount of urea added QE to the upper-limit amount of urea added QEMAX (S170) and ends this process flow. Specific effects obtained from this embodiment will be described below.

The higher the adding valve temperature THJ becomes, the larger the value of the adding valve temperature coefficient K4 becomes. Accordingly, the decrement when decreasing the basic upper-limit amount of urea added QEMAXB using the adding valve temperature coefficient K4 becomes smaller as the adding valve temperature THJ becomes higher. Accordingly, as deposits tend to be produced in the urea adding valve 230 more difficultly, the decrement of the upper-limit amount of urea added QEMAX for limiting the amount of urea added QE becomes smaller and thus the decrement of the amount of urea added QE becomes smaller. Accordingly, it is possible to further appropriately set the decrement of the amount of urea added QE depending on the production tendency of deposits.

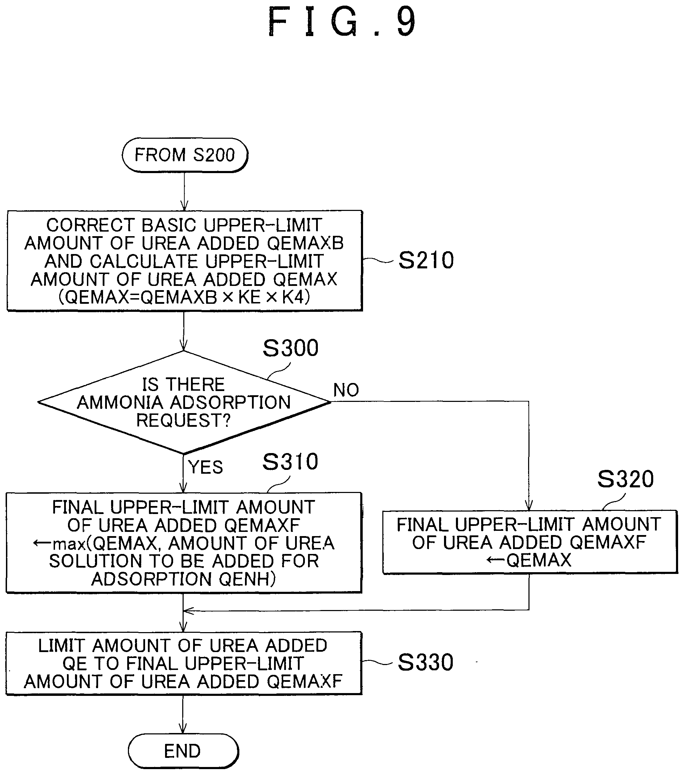

As described above, according to this embodiment, the following advantage can be achieved in addition to the advantages of (1) to (4). (5) The decrement of the amount of urea added QE is changed by setting the adding valve temperature coefficient K4 as the correction coefficient of the basic upper-limit amount of urea added QEMAXB to be variable on the basis of the adding valve temperature THJ. Accordingly, it is possible to further appropriately set the decrement of the amount of urea added QE depending on the production tendency of deposits. An exhaust gas control apparatus for an internal-combustion engine according to a third embodiment will be described below with reference to FIG. 9.

When the amount of urea solution added decreases by performing the above-mentioned decreasing process, there is a possibility that the amount of ammonia adsorbed by the SCR catalyst 41 is insufficient and the NOx purification rate is lowered. Accordingly, in this embodiment, when the amount of ammonia adsorbed NHR by the SCR catalyst 41 is less than a predetermined value, the amount of urea solution added is adjusted so that the amount of ammonia adsorbed NHR increases even in the course of performing of the above-mentioned decreasing process.

The decreasing process of this embodiment skips the process of step S 170 illustrated in FIG. 7. The decreasing process is performed by adding the processes of steps S300 to S330 illustrated in FIG. 9 after performing the process of step S210.

That is, after calculating the upper-limit amount of urea added QEMAX in step S210 illustrated in FIG. 7, the controller 80 performs the process of step 300 illustrated in FIG. 9. In step S300 illustrated in FIG. 9, the controller 80 determines whether there is an ammonia adsorption request (S300). In step S300, it is determined that there is the ammonia adsorption request when the amount of ammonia adsorbed NHR by the SCR catalyst 41 is equal to or less than a predetermined lower limit. The amount of ammonia adsorbed NHR is calculated using an appropriate method. For example, the amount of ammonia adsorbed NHR is calculated on the basis of parameters such as the amount of urea solution added, the exhaust gas temperature, and the exhaust gas flow rate associated with the amount of ammonia adsorbed NHR. The lower limit is set to the minimum value of the amount of ammonia adsorbed necessary after the reduction of NOx is appropriately performed.

When there is no ammonia adsorption request, that is, when the amount of ammonia adsorbed NHR is greater than the lower limit (NO in S300), the controller 80 sets the upper-limit amount of urea added QEMAX calculated in step S210 as a final upper-limit amount of urea added QEMAXF (S320). Then, the controller 80 limits the amount of urea added QE to the final upper-limit amount of urea added QEMAXF (S330) and ends this process flow.

On the other hand, when there is an ammonia adsorption request, that is, when the amount of ammonia adsorbed NHR is equal to or less than the lower limit (YES in S300), the controller 80 sets the larger value of the upper-limit amount of urea added QEMAX calculated in step S210 and an amount of urea solution to be added for adsorption QENH as the final upper-limit amount of urea added QEMAXF (S310). The amount of urea solution to be added for adsorption QENH is the amount of urea solution added necessary for increasing the amount of ammonia adsorbed NHR, which is equal to the lower limit, up to a specified amount of ammonia adsorbed, and is calculated, for example, on the basis of a current amount of ammonia adsorbed NHR insufficient for the specified amount of ammonia adsorbed or the exhaust gas temperature affecting the amount of ammonia adsorbed NHR. The controller 80 limits the amount of urea added QE to the final upper-limit amount of urea added QEMAXF (S330) and ends this process flow.

Specific effects obtained from this embodiment will be described below. First, when there is no ammonia adsorption request, the upper-limit amount of urea added QEMAX calculated in step S210 is set as the final upper-limit amount of urea added QEMAXF. Substantially, the amount of urea added QE is limited to the upper-limit amount of urea added QEMAX calculated in step S210. Accordingly, in the same aspect as the second embodiment, the amount of urea added QE when the performing of the EGR process is inhibited is decreased to be less than the amount of urea added set by the equivalent ratio control.

On the other hand, when there is an ammonia adsorption request, the larger value of the upper-limit amount of urea added QEMAX calculated in step S210 and the amount of urea solution to be added for adsorption QENH is set as the final upper-limit amount of urea added QEMAXF. The amount of urea added QE is limited to the final upper-limit amount of urea added QEMAXF. Accordingly, when the amount of urea solution to be added for adsorption QENH is set as the final upper-limit amount of urea added QEMAXF in step S310 and the amount of urea added QE is limited to the final upper-limit amount of urea added QEMAXF, at least the amount of urea solution corresponding to the amount of urea solution to be added for adsorption QENH is added. Accordingly, the amount of ammonia adsorbed NHR increases and reaches the specific amount of ammonia adsorbed.

When the upper-limit amount of urea added QEMAX is set as the final upper-limit amount of urea added QEMAXF in step S310, the final upper-limit amount of urea added QEMAXF is larger than at least the amount of urea solution to be added for adsorption QENH. Accordingly, even when the amount of urea added QE is limited to the final upper-limit amount of urea added QEMAXF, at least the amount of urea solution corresponding to the amount of urea solution to be added for adsorption QENH is added. Accordingly, the amount of ammonia adsorbed NHR increases and reaches the specific amount of ammonia adsorbed.

In the decreasing process of this embodiment, the process of step S170 illustrated in FIG. 3 is skipped and the processes of steps S300 to S330 illustrated in FIG. 9 are additionally performed after performing the process of step S160. In this case, the same effects are obtained.

As described above, according to this embodiment, the following advantage can be achieved in addition to the advantages of (1) to (5). (6) When the amount of ammonia adsorbed NHR is equal to or less than the predetermined lower limit, the amount of urea solution added is adjusted so that the amount of ammonia adsorbed NHR increases even in the course of performing the decreasing process. Accordingly, since priority is given to the adsorption of ammonia by the SCR catalyst 41 rather than the decreasing of the amount of urea solution by the decreasing process, it is possible to suppress lowering of the NOx purification rate due to the insufficiency of the amount of ammonia adsorbed NHR.

The above-mentioned embodiments may be modified as follows: The upper-limit amount of urea added QEMAX is set so that the amount of urea added QE when the performing of the EGR process is inhibited decreases to be less than the amount of urea added set by the equivalent ratio control. However, in another aspect, the amount of urea added QE when the performing of the EGR process is inhibited may be decreased. For example, the amount of urea added QE may be directly corrected to decrease by performing an appropriate decreasing correction on the amount of urea added QE set by the equivalent ratio control when the performing of the EGR process is inhibited. In this case, it is preferable that the higher the exhaust gas temperature becomes, the smaller the decrement of the amount of urea added QE become.

The EGR-inhibiting coefficient KC, the coolant temperature coefficient K1, the external air temperature coefficient K2, and the atmospheric pressure coefficient K3 are set, but any of these parameters may be properly omitted. For example, the setting of the EGR-inhibiting coefficient KC may be skipped, the setting of the coolant temperature coefficient K1 may be skipped, the setting of the external air temperature coefficient K2 may be skipped, or the setting of the atmospheric pressure coefficient K3 may be skipped. The number of parameters to be omitted is not limited to one and may be two or more.

The environment coefficient KE is set using the EGR-inhibiting coefficient KC, the coolant temperature coefficient K1, the external air temperature coefficient K2, and the atmospheric pressure coefficient K3. In addition, the environment coefficient KE may be set on the basis of the exhaust gas temperature such as the second exhaust gas temperature TH2. In this case, it is preferable that the higher the exhaust gas temperature becomes, the larger the value of the environment coefficient KE become.

In step S150 illustrated in FIG. 3, the smallest value for the EGR-inhibiting coefficient KC, the coolant temperature coefficient K1, the external air temperature coefficient K2, and the atmospheric pressure coefficient K3 is set as the environment coefficient KE. In addition, the EGR-inhibiting coefficient KC may be corrected on the basis of the coolant temperature THW, the external air temperature THout, and the atmospheric pressure PA and the corrected EGR-inhibiting coefficient KC may be set as the environment coefficient KE. In this case, it is preferable that the higher the coolant temperature THW becomes, the larger the value of the EGR-inhibiting coefficient KC become. It is preferable that the higher the external air temperature THout becomes, the larger the value of the EGR-inhibiting coefficient KC become. It is preferable that the lower the atmospheric pressure PA becomes, the larger the value of the EGR-inhibiting coefficient KC become.

In the second embodiment, the tip temperature of the urea adding valve 230 is estimated as the adding valve temperature THJ. However, since the tip temperature of the urea adding valve 230 is associated with the temperature of another portion thereof, the temperature of another portion of the urea adding valve 230 may be estimated or detected instead of the tip temperature.

In the third embodiment, the upper limit for limiting the amount of urea added QE is adjusted to increase the amount of ammonia adsorbed NHR, but in another aspect, the amount of ammonia adsorbed NHR may be increased. For example, when the amount of ammonia adsorbed NHR is equal to or less than a predetermined lower limit, the decreasing of the amount of urea added by the decreasing process may be inhibited. In this case, compared with a case where the decreasing of the amount of urea added by the decreasing process is performed, the amount of urea added increases and the amount of ammonia adsorbed NHR also increases. Accordingly, in this modification example, it is possible to suppress the lowering of the NOx purification rate due to the insufficiency of the amount of ammonia adsorbed NHR.

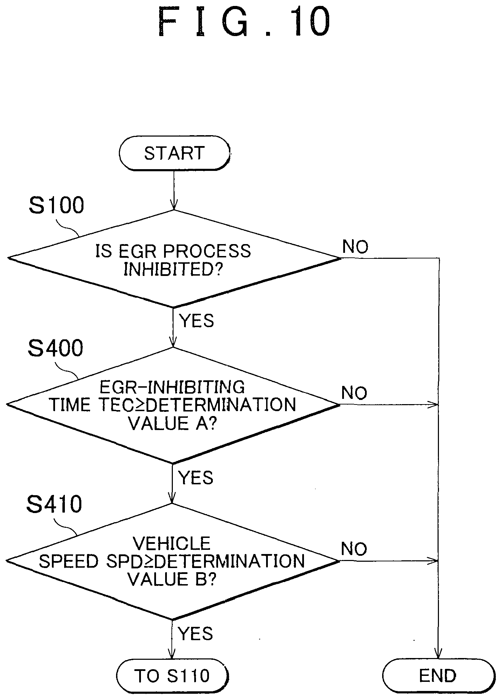

When the performing of the EGR process is inhibited for a relatively short time, the accumulated amount of urea solution added does not increase much and thus deposits are hardly produced without performing the decreasing process. Accordingly, it is preferable that the decreasing process be performed when the performing of the EGR process is continuously inhibited for a predetermined time or more. When the vehicle runs at a high speed equal to or greater than a predetermined speed, the engine 1 is in the high-load state and thus the amount of NOx produced increases in comparison with running at a low speed. Accordingly, it is preferable that the decreasing process be performed when the performing of the EGR process is continuously inhibited for a predetermined time or more and the vehicle runs at a high speed equal to or greater than a predetermined speed. This modification example can be embodied by additionally performing the processes of steps S400 and S410 illustrated in FIG. 10 between the processes of step S100 and step S110 illustrated in FIG. 3 in the first embodiment.

As illustrated in FIG. 10, the controller 80 determines whether the performing of the EGR process is inhibited (S 100). When the performing of the EGR process is inhibited (YES in S100), the controller 80 determines whether an EGR-inhibiting time TEC is equal to or greater than a predetermined determination value A (S400). The EGR-inhibiting time TEC is a time elapsing after the performing of the EGR process is inhibited. The determination value A is set to an EGR-inhibiting time TEC enough to suppress the production of deposits in the urea adding valve 230 without performing the decreasing process in advance.

When, the EGR-inhibiting time TEC is equal to or greater than the determination value A (YES in S400), the controller 80 determines whether the current vehicle speed SPD is equal to or greater than a predetermined determination value B (S410). The determination value B is set to a vehicle speed SPD corresponding to the high-load state of the engine 1 in which the amount of NOx produced is marked in advance.

When the current vehicle speed SPD is equal to or greater than the determination value B (YES in S410), the controller 80 performs the decreasing process of decreasing the amount of urea solution added when the performing of the EGR process is inhibited to be less than the amount of urea solution set by the equivalent ratio control by sequentially performing the processes of step S110 and subsequent steps.

On the other hand, when it is determined in step S100 that the performing of the EGR process is not inhibited (NO in S100), the controller 80 temporarily ends this process flow. When it is determined in step S400 that the EGR-inhibiting time TEC is less than the determination value A (NO in S400) or when it is determined in step S410 that the vehicle speed SPD is less than the determination value B (NO in S410), the controller 80 temporarily ends this process flow.

According to this modification example, in a state where the amount of NOx produced easily increases, the above-mentioned decreasing process can be performed. More simply, the determination process of step S400 or the determination process of step S410 illustrated in FIG. 10 may be skipped. This modification example may be applied to the second embodiment or the third embodiment.

The urea solution is used as the reductant, but another reductant may be used.

## Claims

1. An exhaust gas control apparatus for an internal-combustion engine, comprising:
a catalyst (41) that reduces NOx in exhaust gas by addition of a reductant;
an adding valve (230) that adds the reductant to the exhaust gas;
an exhaust gas recirculation device (13, 14, 15) that performs an exhaust gas recirculation process of introducing a part of the exhaust gas into intake air; and
a controller (80) configured to:
(a) perform an equivalent ratio control of adjusting an amount of reductant to be added depending on an amount of NOx in the exhaust gas;
(b) perform a decreasing process of decreasing the amount of reductant added when the performing of the exhaust gas recirculation process is inhibited so as to be less than the amount of reductant set in the equivalent ratio control;
**characterized in that** the controller is further configured to
(c) set a decrement of the amount of reductant by the decreasing process to be smaller as an exhaust gas temperature is higher.

2. The exhaust gas control apparatus according to claim 1, wherein the controller (80) changes the decrement on the basis of at least one of an engine coolant temperature, an external air temperature, and an atmospheric pressure.

3. The exhaust gas control apparatus according to claim 1 or 2, wherein the controller (80) performs the decreasing process when the performing of the exhaust gas recirculation process is continuously inhibited for a predetermined time or more.

4. The exhaust gas control apparatus according to claim 1 or 2, wherein the exhaust gas control apparatus is mounted on a vehicle, and
wherein the controller (80) performs the decreasing process when the performing of the exhaust gas recirculation process is continuously inhibited for a predetermined time or more and the vehicle runs at a high speed equal to or greater than a predetermined speed.

5. The exhaust gas control apparatus according to any one of claims 1 to 4, wherein the controller (80) changes the decrement on the basis of the temperature of the adding valve (230).

6. The exhaust gas control apparatus according to any one of claims 1 to 5, wherein the controller (80) sets an upper limit for limiting the amount of reductant added, and
wherein the controller (80) decreases the amount of reductant added by decreasing the upper limit when the performing of the exhaust gas recirculation process is inhibited as the decreasing process.

7. The exhaust gas control apparatus according to any one of claims 1 to 6, wherein the catalyst (41) is a catalyst that adsorbs ammonia originating from the reductant, and
wherein the controller (80) adjusts the amount of reductant added so as to increase the amount of ammonia adsorbed even in the course of performing the decreasing process when the amount of ammonia adsorbed by the catalyst (41) is equal to or less than a predetermined value.

8. An exhaust gas control method for an internal-combustion engine, the internal-combustion engine including a catalyst (41), an adding valve (230), and an exhaust gas recirculation device (13, 14, 15), the catalyst (41) purifying NOx in exhaust gas by addition of a reductant, the adding valve (230) adding the reductant to the exhaust gas, the exhaust gas recirculation device (13, 14, 15) performing an exhaust gas recirculation process of introducing a part of the exhaust gas into intake air, the control method comprising:
performing an equivalent ratio control of adjusting an amount of reductant to be added depending on an amount of NOx in the exhaust gas;
performing a decreasing process of decreasing the amount of reductant added when the performing of the exhaust gas recirculation process is inhibited so as to be less than the amount of reductant set in the equivalent ratio control;
the control method is **characterized in** setting a decrement of the amount of reductant by the decreasing process to be smaller as an exhaust gas temperature is higher.

9. The exhaust gas control method according to claim 8, wherein the decrement is changed on the basis of at least one of an engine coolant temperature, an external air temperature, and an atmospheric pressure.

10. The exhaust gas control method according to claim 8 or 9, wherein the decreasing process is performed when the performing of the exhaust gas recirculation process is continuously inhibited for a predetermined time or more.

11. The exhaust gas control method according to claim 8 or 9, wherein the exhaust gas control apparatus is mounted on a vehicle, and
wherein the decreasing process is performed when the performing of the exhaust gas recirculation process is continuously inhibited for a predetermined time or more and the vehicle runs at a high speed equal to or greater than a predetermined speed.

12. The exhaust gas control method according to any one of claims 8 to 11, wherein the decrement is changed on the basis of the temperature of the adding valve (230).

13. The exhaust gas control method according to any one of claims 8 to 12, further comprising:
setting an upper limit for limiting the amount of reductant added,
wherein the amount of reductant added is decreased by decreasing the upper limit when the performing of the exhaust gas recirculation process is inhibited as the decreasing process.

14. The exhaust gas control method according to any one of claims 8 to 13, wherein the catalyst (41) is a catalyst that adsorbs ammonia originating from the reductant, and
wherein the amount of reductant added is adjusted so as to increase the amount of ammonia adsorbed even in the course of performing the decreasing process when the amount of ammonia adsorbed by the catalyst is equal to or less than a predetermined value.

## Patentansprüche

1. Abgassteuergerät für einen Verbrennungsmotor, das aufweist:
einen Katalysator (41), der durch eine Zugabe eines Reduktionsmittels NOₓ im Abgas reduziert,
ein Hinzufügventil (230), das das Reduktionsmittel dem Abgas hinzufügt,
eine Abgasrückführungseinrichtung (13, 14, 15), die einen Abgasrückführungsprozess, bei dem ein Teil des Abgases in die Einlassluft hineingeführt wird, ausführt, und
eine Steuereinrichtung (80), die konfiguriert ist, um:
(a) eine Entsprechungsverhältnissteuerung auszuführen, bei der ein Betrag des Reduktionsmittels, der hinzugefügt werden soll, in Abhängigkeit von einem Betrag von NOₓ im Abgas angepasst wird,
(b) einen Verringerungsprozess auszuführen, bei dem der Betrag des hinzugefügten Reduktionsmittels verringert wird, wenn das Ausführen des Abgasrückführungsprozesses gehemmt ist, um weniger als der Betrag des Reduktionsmittels, der in der Entsprechungsverhältnissteuerung festgesetzt wurde, zu sein,
**dadurch gekennzeichnet, dass** das Steuergerät außerdem konfiguriert ist, um
(c) ein Dekrement des Betrags des Reduktionsmittels durch den Verringerungsprozess festzusetzen, um kleiner zu sein, wenn eine Abgastemperatur höher ist.

2. Abgassteuergerät nach Anspruch 1, wobei das Steuergerät (80) das Dekrement auf der Basis von zumindest einem der Elemente, Motorkühlmitteltemperatur, Außenlufttemperatur und atmosphärischer Druck, ändert.

3. Abgassteuergerät nach einem der Ansprüche 1 oder 2, wobei das Steuergerät (80) den Verringerungsprozess ausführt, wenn das Ausführen des Abgasrückführungsprozesses für eine vorbestimmte Zeit oder länger fortlaufend gehemmt ist.

4. Abgassteuergerät nach einem der Ansprüche 1 oder 2, wobei das Abgassteuergerät an einem Fahrzeug montiert ist, und
wobei das Steuergerät (80) den Verringerungsprozess ausführt, wenn das Ausführen des Abgasrückführungsprozesses für eine vorbestimmte Zeit oder länger fortlaufend gehemmt ist und das Fahrzeug mit einer hohen Geschwindigkeit, die gleich einer vorbestimmten Geschwindigkeit oder höher als diese ist, fährt.

5. Abgassteuergerät nach einem der Ansprüche 1 bis 4, wobei das Steuergerät (80) auf der Basis der Temperatur des Hinzufügventils (230) das Dekrement ändert.

6. Abgassteuergerät nach einem der Ansprüche 1 bis 5, wobei das Steuergerät (80) eine obere Grenze zum Begrenzen des Betrags des hinzugefügten Reduktionsmittels festlegt, und
wobei das Steuergerät (80) als den Verringerungsprozess den Betrag des hinzugefügten Reduktionsmittels durch ein Verringern der oberen Grenze verringert, wenn das Ausführen des Abgasrückführungsprozesses gehemmt ist.

7. Abgassteuergerät nach einem der Ansprüche 1 bis 6, wobei der Katalysator (41) ein Katalysator ist, der Ammoniak, das aus dem Reduktionsmittel stammt, adsorbiert, und
wobei das Steuergerät (80) den Betrag des hinzugefügten Reduktionsmittels anpasst, um auch im Verlauf der Ausführung des Verringerungsprozesses, wenn der Betrag des Ammoniaks, der durch den Katalysator (41) adsorbiert wird, gleich einem vorbestimmten Wert oder geringer als dieser ist, den Betrag des adsorbierten Ammoniaks zu erhöhen.

8. Abgassteuerverfahren für einen Verbrennungsmotor, wobei der Verbrennungsmotor einen Katalysator (41), ein Hinzufügventil (230) und eine Abgasrückführungseinrichtung (13, 14, 15) enthält, wobei der Katalysator (41) durch eine Zugabe von einem Reduktionsmittel NOₓ im Abgas reinigt, das Hinzufügventil (230) das Reduktionsmittel dem Abgas hinzufügt, die Abgasrückführungseinrichtung (13, 14, 15) einen Abgasrückführungsprozess ausführt, bei dem ein Teil des Abgases in eine Einlassluft hineingeführt wird, wobei das Steuerverfahren aufweist:
Ausführen einer Entsprechungsverhältnissteuerung, bei der ein Betrag des Reduktionsmittels, das hinzugefügt werden soll, in Abhängigkeit von einem Betrag von NOₓ im Abgas angepasst wird,
Ausführen eines Verringerungsprozess, bei dem der Betrag des hinzugefügten Reduktionsmittels verringert wird, wenn das Ausführen des Abgasrückführungsprozesses gehemmt ist, um weniger als der Betrag des Reduktionsmittels, der durch die Entsprechungsverhältnissteuerung festgesetzt wurde, zu sein,
wobei das Steuerverfahren **gekennzeichnet ist, durch**
Festsetzen eines Dekrements des Betrags des Reduktionsmittels **durch** den Verringerungsprozess, um kleiner zu sein, wenn eine Abgastemperatur höher ist.

9. Abgassteuerverfahren nach Anspruch 8, wobei das Dekrement auf der Basis von zumindest einem der Elemente, Motorkühlmitteltemperatur, externe Lufttemperatur und atmosphärischer Druck, geändert wird.

10. Abgassteuerverfahren nach Anspruch 8 oder 9, wobei der Verringerungsprozess ausgeführt wird, wenn das Ausführen des Abgasrückführungsprozesses für eine vorbestimmte Zeit oder länger fortlaufend gehemmt ist.

11. Abgassteuerverfahren nach Anspruch 8 oder 9, wobei das Abgassteuergerät an einem Fahrzeug montiert ist, und
wobei der Verringerungsprozess ausgeführt wird, wenn das Ausführen des Abgasrückführungsprozesses für eine vorbestimmte Zeit oder länger fortlaufend gehemmt ist und das Fahrzeug mit einer hohen Geschwindigkeit, die gleich einer vorbestimmten Geschwindigkeit oder höher als diese ist, fährt.

12. Abgassteuerverfahren nach einem der Ansprüche 8 bis 11, wobei das Dekrement auf der Basis der Temperatur des Hinzufügventils (230) geändert wird.

13. Abgassteuerverfahren nach einem der Ansprüche 8 bis 12, das außerdem aufweist:
Festlegen einer oberen Grenze zum Begrenzen des Betrags des hinzugefügten Reduktionsmittels,
wobei als der Verringerungsprozess der Betrag des hinzugefügten Reduktionsmittels durch ein Verringern der oberen Grenze verringert wird, wenn das Ausführen des Abgasrückführungsprozesses gehemmt ist.

14. Abgassteuerverfahren nach einem der Ansprüche 8 bis 13, wobei der Katalysator (41) ein Katalysator ist, der Ammoniak, das aus dem Reduktionsmittel stammt, adsorbiert, und
wobei die Menge des hinzugefügten Reduktionsmittels angepasst wird, um auch im Verlauf der Ausführung des Verringerungsprozesses, wenn der Betrag des Ammoniaks, der durch den Katalysator adsorbiert wird, gleich einem vorbestimmten Wert oder geringer als dieser ist, den Betrag des adsorbierten Ammoniaks zu erhöhen.

## Revendications

1. Appareil de contrôle de gaz d'échappement pour un moteur à combustion interne, comprenant :
un catalyseur (41) qui réduit NOx dans des gaz d'échappement par addition d'un agent réducteur ;
une vanne d'addition (230) qui ajoute l'agent réducteur aux gaz d'échappement ;
un dispositif de recirculation de gaz d'échappement (13, 14, 15) qui réalise un procédé de recirculation de gaz d'échappement introduisant une partie des gaz d'échappement dans de l'air d'admission ; et
un dispositif de contrôle (80) configuré pour :
(a) réaliser un contrôle de taux équivalent ajustant une quantité d'agent réducteur à ajouter selon une quantité de NOx dans les gaz d'échappement ;
(b) réaliser un procédé de diminution diminuant la quantité d'agent réducteur ajoutée lorsque la réalisation du procédé de recirculation de gaz d'échappement est inhibée afin d'être inférieure à la quantité d'agent réducteur fixée dans le contrôle de taux équivalent ;
**caractérisé en ce que** le dispositif de contrôle est de plus configuré pour
(c) fixer un décrément de la quantité d'agent réducteur par le procédé de diminution afin qu'elle soit d'autant plus faible que la température des gaz d'échappement est élevée.

2. Appareil de contrôle de gaz d'échappement selon la revendication 1, dans lequel le dispositif de contrôle (80) modifie le décrément sur la base d'au moins une d'une température de réfrigérant de moteur, d'une température d'air externe, et d'une pression atmosphérique.

3. Appareil de contrôle de gaz d'échappement selon la revendication 1 ou 2, dans lequel le dispositif de contrôle (80) réalise le procédé de diminution lorsque la réalisation du procédé de recirculation de gaz d'échappement est inhibée en continu pendant une durée prédéterminée ou supérieure.

4. Appareil de contrôle de gaz d'échappement selon la revendication 1 ou 2, dans lequel l'appareil de contrôle de gaz d'échappement est monté sur un véhicule, et
dans lequel le dispositif de contrôle (80) réalise le procédé de diminution lorsque la réalisation du procédé de recirculation de gaz d'échappement est inhibée en continu pendant une durée prédéterminée ou supérieure et le véhicule se déplace à une vitesse élevée supérieure ou égale à une vitesse prédéterminée.

5. Appareil de contrôle de gaz d'échappement selon l'une quelconque des revendications 1 à 4, dans lequel le dispositif de contrôle (80) modifie le décrément sur la base de la température de la vanne d'admission (230).

6. Appareil de contrôle de gaz d'échappement selon l'une quelconque des revendications 1 à 5, dans lequel le dispositif de contrôle (80) fixe une limite supérieure pour limiter la quantité d'agent réducteur ajoutée, et
dans lequel le dispositif de contrôle (80) diminue la quantité d'agent réducteur ajoutée en diminuant la limite supérieure lorsque la réalisation du procédé de recirculation de gaz d'échappement est inhibée comme le procédé de diminution.

7. Appareil de contrôle de gaz d'échappement selon l'une quelconque des revendications 1 à 6, dans lequel le catalyseur (41) est un catalyseur qui adsorbe de l'ammoniac provenant de l'agent réducteur, et
dans lequel le dispositif de contrôle (80) ajuste la quantité d'agent réducteur ajoutée afin d'augmenter la quantité d'ammoniac adsorbée même au cours de la réalisation du procédé de diminution lorsque la quantité d'ammoniac adsorbée par le catalyseur (41) est inférieure ou égale à une valeur prédéterminée.

8. Procédé de contrôle de gaz d'échappement pour un moteur à combustion interne, le moteur à combustion interne comprenant un catalyseur (41), une vanne d'addition (230), et un dispositif de recirculation de gaz d'échappement (13, 14, 15), le catalyseur (41) purifiant NOx dans des gaz d'échappement par addition d'un agent réducteur, la vanne d'addition (230) ajoutant l'agent réducteur aux gaz d'échappement, le dispositif de recirculation de gaz d'échappement (13, 14, 15) réalisant un procédé de recirculation de gaz d'échappement introduisant une partie des gaz d'échappement dans de l'air d'admission, le procédé de contrôle comprenant :
la réalisation d'un contrôle de taux équivalent ajustant une quantité d'agent réducteur à ajouter selon une quantité de NOx dans les gaz d'échappement ;
la réalisation d'un procédé de diminution diminuant la quantité d'agent réducteur ajoutée lorsque la réalisation du procédé de recirculation de gaz d'échappement est inhibée afin d'être inférieure à la quantité d'agent réducteur fixée dans le contrôle de taux équivalent ;
le procédé de contrôle est **caractérisé par**
la fixation d'un décrément de la quantité d'agent réducteur par le procédé de diminution afin qu'elle soit d'autant plus faible que la température des gaz d'échappement est élevée.

9. Procédé de contrôle de gaz d'échappement selon la revendication 8, dans lequel le décrément est modifié sur la base d'au moins une d'une température de réfrigérant de moteur, d'une température d'air externe, et d'une pression atmosphérique.

10. Procédé de contrôle de gaz d'échappement selon la revendication 8 ou 9, dans lequel le procédé de diminution est réalisé lorsque la réalisation du procédé de recirculation de gaz d'échappement est inhibée en continu pendant une durée prédéterminée ou supérieure.

11. Procédé de contrôle de gaz d'échappement selon la revendication 8 ou 9, dans lequel l'appareil de contrôle de gaz d'échappement est monté sur un véhicule, et
dans lequel le procédé de diminution est réalisé lorsque la réalisation du procédé de recirculation de gaz d'échappement est inhibée en continu pendant une durée prédéterminée ou supérieure et le véhicule se déplace à une vitesse élevée supérieure ou égale à une vitesse prédéterminée.

12. Procédé de contrôle de gaz d'échappement selon l'une quelconque des revendications 8 à 11, dans lequel le décrément est modifié sur la base de la température de la vanne d'addition (230).

13. Procédé de contrôle de gaz d'échappement selon l'une quelconque des revendications 8 à 12, comprenant de plus :
la fixation d'une limite supérieure pour limiter l'agent réducteur ajouté,
dans lequel la quantité d'agent réducteur ajoutée est diminuée en diminuant la limite supérieure lorsque la réalisation du procédé de recirculation de gaz d'échappement est inhibée comme le procédé de diminution.

14. Procédé de contrôle de gaz d'échappement selon l'une quelconque des revendications 8 à 13, dans lequel le catalyseur (41) est un catalyseur qui adsorbe de l'ammoniac provenant de l'agent réducteur, et
dans lequel la quantité d'agent réducteur ajoutée est ajustée afin d'augmenter la quantité d'ammoniac adsorbée même au cours de la réalisation du procédé de diminution lorsque la quantité d'ammoniac adsorbée par le catalyseur est inférieure ou égale à une valeur prédéterminée.
